Europäisches Patentamt

European Patent Office

Office européen des brevets

(19)

(11) Publication number: 0 305 027
A2

## EUROPEAN PATENT APPLICATION

(21) Application number: 88305065.0

(22) Date of filing: 03.06.88

(51) Int. Cl.4: G01K 7/22

(30) Priority: 27.08.87 GB 8720242

(43) Date of publication of application:
01.03.89 Bulletin 89/09

(84) Designated Contracting States:
AT BE DE ES FR IT NL SE

(71) Applicant: STC PLC
10, Maltravers Street
London, WC2R 3HA(GB)

(72) Inventor: Llewellyn, Alan David
25, Mountfields Road
Taunton Somerset, TA1 3BL(GB)

(74) Representative: Dennis, Mark Charles et al
STC Patent West Road
Harlow Essex CM20 2SH(GB)

(54) Temperature probe.

(57) A temperature probe comprises a shallow housing (2,8) having a temperature sensing face (15) and an opposite face (19) from which electrical terminals (3) extend. A thermistor (1) is mounted in the housing in thermal contact with the temperature sensing face (15). A resilient insulating member which follows a meander path and provides a vibration-proof support for electrical conductors, for example a flexible printed circuit board (4) electrically connects the thermistor (1) to the electrical terminals (3) and provides a thermal break between the thermistor and the terminals.

Fig.2.

## TEMPERATURE PROBE

This invention relates to a temperature probe.

For any temperature sensing probe it is important that the sensor attains the same temperature as the surrounding medium whose temperature is to be sensed. If this is not the case the recorded temperature may be inaccurate.

The traditional method to optimise the sensing ability and accuracy of a temperature probe is to employ a long body probe such that the actual temperature sensing element, interconnections and a probe sheath are all subjected to the medium whose temperature is to be sensed. The effect of this probe immersion is to heat/cool the probe mass such that thermal losses via lead wires or terminations are kept to a minimum. Further improvement in probe performance can be achieved by reducing the size of lead wires or terminations, but this is at the expense of mechanical strength.

Some applications of temperature probes are such that long body probes cannot be employed and, where rapid component installation is required, large . "push on" blade terminals (tags) may be necessary. In these cases the traditional ways of optimising sensitivity are not appropriate. One such application is a domestic automatic washing machine. The revolving wash drum does not permit a long probe immersion. The probe immersion may only be some 10mm at a maximum. The terminations of the probe may involve 6.35mm wide tags into which female connectors can be pushed. In addition, for B.E.A.B. approval of a washing machine, a water temperature probe has to have at least three electrically insulating layers between the water and the actual temperature sensing element, and one of these insulating layers must be at least 1mm thick.

A conventional temperature sensing component used in washing machines consists of several, usually three, bimetallic discs which are dish-shaped and such as to changeover their configuration ("pop") at a respective predetermined temperature. The mechanical movement caused by the configuration changeover is used to push an electrically and thermally isolating rod, which in turn operates the contacts of an electrical switch. The disadvantage of this system is that it only operates at fixed temperature points and, as with all bimetallic products, is subject to a hysterisis of some 5°C.

In the case of, for example, a washing machine there are also inherent problems associated with vibration and thus it is desirable to ensure that electrical connections within the probe between the actual temperature sensing element and the electrical terminals of the probe can withstand vibration. One possible solution is to employ electrically conducting springs as the electrical connections. However such springs will not only be expensive themselves but also involve added expense as a result of having suitable mountings in the probe housing and associated assembly costs. Thus, except on a very large mass production basis, springs are not an economic proposition. Another possibility is to employ individual connecting leads which are substantially longer than the distance to be bridged and thus adopt a meander path within the cavity of the probe housing. The cavity is filled with a gel or silicone rubber for vibration damping and temperature insulation purposes. From a manufacturing viewpoint such a connection scheme is considered to be impracticable. The present invention thus aims to provide temperature probes which overcome the above problems and are inexpensive and simple to manufacture/assemble.

According to one aspect of the present invention there is provided a temperature probe comprising a housing having externally accessible electrical terminals and a temperature sensing face, characterised by a thermistor mounted within said housing in thermal contact with said face and means within said housing electrically connecting said thermistor to said terminals and providing a thermal break between said thermistor and said terminals, said means comprising a resilient insulating member which follows a meander path and provides vibration-proof support for electrical conductors extending between the thermistor and the terminals.

According to a further aspect of the present invention there is provided a temperature probe characterised by a shallow housing which is substantially cylindrical, externally accessible electrical terminals provided at one cylinder end face, the other cylinder end face comprising a temperature sensing face, a thermistor mounted within said housing in thermal contact with said temperature sensing face, and means within said housing electrically connecting said thermistor to said terminals and providing a thermal break between said thermistor and said terminals, the axial length of the housing being less than the length of the electrically connecting and thermal break providing means, and said means comprising a resilient insulating member which follows a meander path and provides vibration-proof support for electrical conductors extending between the thermistor and the terminals.

An embodiment of the invention will now be described with reference to the accompanying drawings, in which:

Fig. 1 shows an exploded view of the components of a temperature probe;

Fig. 2 shows a section through an assembled temperature probe,

Fig. 3 illustrates in a partial side view the course adopted by a flexible printed circuit board in the assembled temperature probe, and

Fig. 4 is a cross section of the probe of Figs. 1 to 3 mounted in the water retaining wall of a washing machine.

The temperature sensing element of the temperature probe illustrated in the drawings is a negative temperature coefficient (NTC) thermistor 1 which gives a temperature sensing ability over an entire working range, say 0°C-100°C for a washing machine, as opposed to operation at a fixed temperature as with bimetallic based devices. The other elements of the probe comprise one end (top) housing shell 2, two metallic termination tags 3, a flexible printed circuit board 4, two eyelet rivets 5, a metallic disc 6, two insulating discs 7 and another end (bottom) housing shell 8. The end shells 2 and 8 may be of a thermoplastic such as NYLON; the tags 3 of brass, the flexible printed circuit board of a polyimide such as KAPTON (Registered Trade Mark), the metallic disc 6 of copper and the insulating discs 7 of polyester.

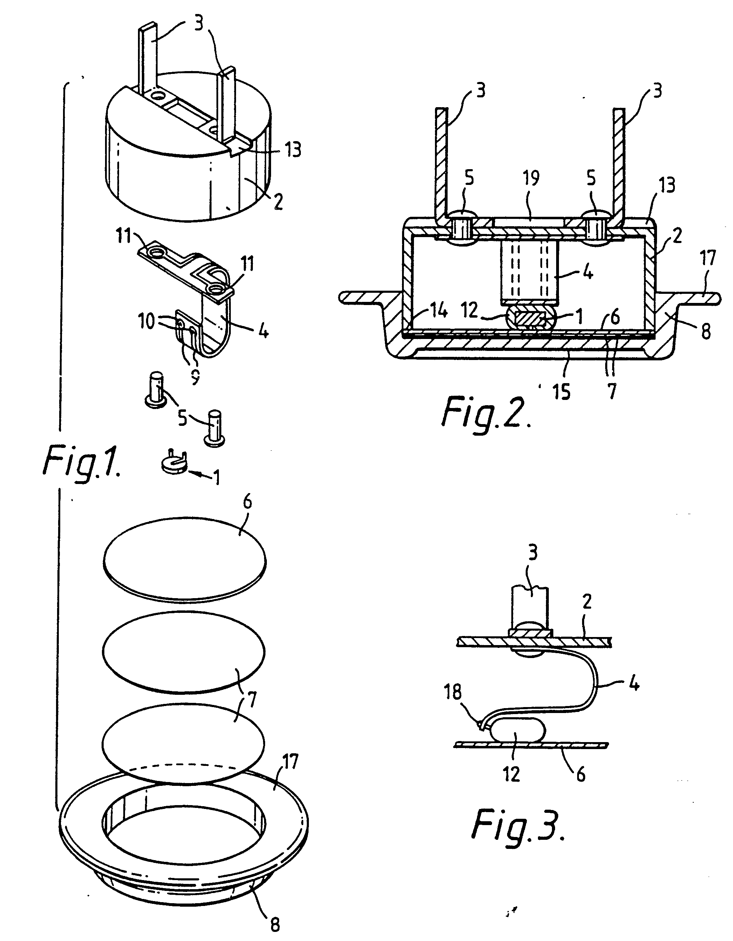

The flexible printed circuit board 14 is generally T-shaped when laid flat with two electrically conductive paths 9 having connection areas 10 and 11 at the ends thereof. Each terminal of the thermistor 1 is soldered (at 18, Fig. 3) to a respective connection area 10 of the printed circuit board and the thermistor is bonded to the copper disc 6 with a thermal transfer resin 12 (Figs. 2 and 3), for example a silicone rubber resin, that exhibits high thermal conductivity characteristics. The tags 3 are prevented from rotation by virtue of being disposed with their bases in a groove 13 in the top shell 2. The tags 3 and the connection areas 11 of the printed circuit board are electrically connected together by the eyelet rivets 5. The insulating discs 7 are disposed in the bottom shell 8 and the copper disc/thermistor/printed circuit board/top shell sub-assembly inserted. The top and bottom shells 2 and 8 are locked together, for example, by means of a snap fit arrangement (not shown) which also prevents rotation of the shells relative to one another. The edges of the copper disc and the discs 7 are sandwiched between the rim 14 of the top shell 2 and the end face 15 of the bottom shell.

As indicated in the drawings, particularly Fig. 3, in the assembled state the printed circuit board adops a bent-over generally U-shaped configuration. The printed circuit board 4 serves both to connect the thermistors electrically to the tags and as a thermal hat is it maintains thermal energy within the copper disc/thermistor assembly and substantially prevents thermal energy from passing to the tags and the top shell. The required electrical isolation between the water and the sensing element (thermistor 1) is provided by the end face 15 of the lower shell, which provides also a water temperature sensing face of the housing, which may be 1mm thick, and the two polyester discs 7, which may be 19 microns thick.

A relatively large surface area of the bottom shell 8, including the end face 15, is in direct contact with the water whose temperature is to be sensed and serves to transfer heat to the copper disc which is in thermal contact with face 15. As the copper disc is bonded to the thermistor the latter reaches a temperature which is very close to the water temperature and its resistance changes accordingly, which resistance charges may be monitored (by means not shown) and employed to control the operation of a water heating element.

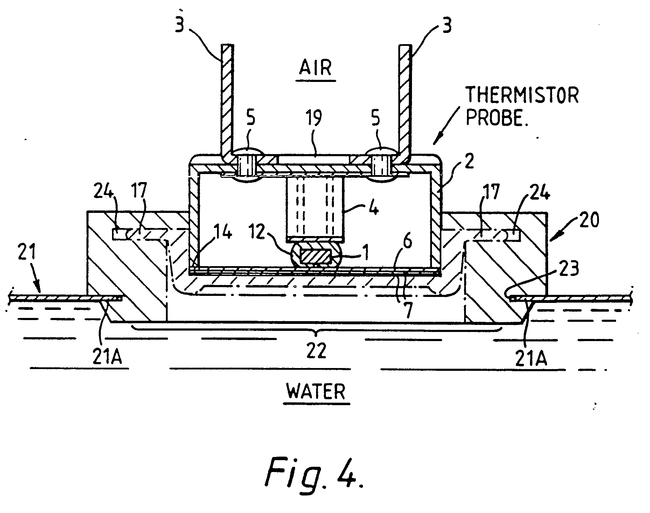

As will be appreciated from Fig. 2, in particular, the temperature probe is a very shallow structure which will project a very small distance through the wall of a water container (not shown). The housing is substantially cylindrical with an axial length, in the illustrated embodiment, less than its radius. The tags are provided at one cylinder end face 19 and the temperature sensing end face 15 is the other cylinder end face. A flange 17 is provided on the bottom shell. The flexible printed circuit board is longer than the axial length of the housing so that it adopts the U-shaped configuration referred to above, and shown in Fig. 3, thereby providing a thermal break as previously stated, and facilitating easy assembly without mechanically stressing the internal electrical terminations. The probe may be sealingly secured in a hole in the wall by, for example, a rubber grommet 20, as shown in Fig. 4. Fig. 4 shows the wall 21 of a washing machine having a circular hole 22 and an annular rubber grommet 20 having a first outwardly facing circular slot 23 gripping and sealing to the rim 21A of the wall 21 and a second inwardly facing circular slot 24 gripping and sealing to the flange 17. The grommet thus provides a watertight seal between the wall 21 and the probe flange 17. Electrical connection to the tags may be made by female connector elements (not shown).

Whereas the lower shell is described above as of an electrically insulating material, alternate applications of the basic design configuration may require the lower shell to be of other materials, such as metal for monitoring air temperatures. The working temperature range is dependent on the probe body material and the thermistor type used, and it is considered that a temperature range of -55°C to 150°C is obtainable.

In some applications a positive temperature coefficient thermistor may be used in place of or in combination with the negative temperature coefficient thermistor 1.

Whereas in the embodiment described above a flexible printed circuit board comprises the electrical connection and thermal break providing means between the thermistor and the terminals (tags), this is not the only possibility. As an alternative to a flexible printed circuit board there may be used other resilient insulating members in sheet form which provide a vibration-proof support for electrical conductors affixed thereto, for example individual wires mounted thereon in a suitable manner rather than printed thereon as in a printed circuit board. The resilient insulating member may adopt a path in the probe housing cavity which comprises more of a meander than the U-shaped configuration shown. The invention thus provides in a particularly simple manner a reliable and easily assembled means of achieving electrical connection and thermal break between a thermistor and connection tabs of a temperature probe.

**Claims**

1. A temperature probe comprising a housing (2,8) having externally accessible electrical terminals (3) and a temperature sensing face (15), characterised by a thermistor (1) mounted within said housing (2,8) in thermal contact with said face (15) and means (4) within said housing electrically connecting said thermistor (1) to said terminals (3) and providing a thermal break between said thermistor (1) and said terminals (3), said means (4) comprising a resilient insulating member which follows a meander path and provides vibration-proof support for electrical conductors (9) extending between the thermistor (1) and the terminals (3).

2. A temperature probe as claimed in claim 1, wherein the terminals (3) are accessible at a housing face (19) extending substantially in parallel to said temperature sensing face (15), the distance between said faces (15,19) being less than the length of the electrically connecting and thermal break providing means (4).

3. A temperature probe as claimed in claim 1 or claim 2 characterised in that the electrically connecting and thermal break providing means (4) is comprised by a flexible printed circuit board.

4. A temperature probe as claimed in any one of the preceding claims characterised in that the thermistor (1) is bonded to a metallic disc (6) by thermal transfer resin (12) and the metallic disc (6) is located in thermal contact with said temperature sensing face (15).

5. A temperature probe as claimed in any one of the preceding claims characterised in that the housing (2,8) is formed in two parts, one part (8) including the temperature sensing face (15) and the electrical terminals (3) being mounted to the other part (2).

6. A temperature probe as claimed in claim 5 characterised in that the two housing parts (2,8) are snap-fitted together and non-rotatable with respect to one another.

7. A temperature probe as claimed in claim 5 or claim 6 characterised in that the one part (8) of the housing is formed of electrically insulating material.

8. A temperature probe as claimed in claim 6 as appendant to claim 4, characterised in that the housing parts (2,8) are formed of electrically insulating material and the metallic disc (6) is secured between them when they are snap-fitted together.

9. A temperature probe as claimed in claim 7 or claim 8 characterised by two layers of electrically insulating material (7) disposed between the metallic disc (6) and the temperature sensing face (15).

10. A temperature probe as claimed in any one of claims 7 to 9 characterised in that the thermistor (1) is a negative temperature coefficient thermistor, characterised in that the metallic disc (6) is of copper, the housing (2,8) is of polyamide, and the electrically connecting and thermal break providing means (4) comprises a polyimide flexible printed circuit.

11. A temperature probe characterised by a shallow housing (2,8) which is substantially cylindrical, externally accessible electrical terminals (3) provided at one cylinder end face, the other cylinder end face comprising a temperature sensing face (15), a thermistor (1) mounted within said housing in thermal contact with said temperature sensing face (15), and means (4) within said housing electrically connecting said thermistor (1) to said terminals (3) and providing a thermal break between said thermistor and said terminals, the axial length of the housing being less than the length of the electrically connecting and thermal break providing means, said means (4) comprising a resilient insulating member which follows a meander path and provides vibration-proof support for electrical conductors (9) extending between the thermistor (1) and the terminals (3).

12. A temperature probe as claimed in claim 11, characterised in that the electrically connecting and thermal break providing means (4) is comprised by a flexible printed circuit board.

13. A temperature probe substantially as herein described with reference to and as illustrated in the accompanying drawings.

Fig.1.

Fig.2.

Fig.3.

AIR

THERMISTOR
PROBE.

WATER

Fig. 4.